# EUROPÄISCHE PATENTSCHRIFT

(11) **EP 1 665 685 B1**
(45) Veröffentlichungstag und Bekanntmachung des Hinweises auf die Patenterteilung: **03.01.2007**
(21) Anmeldenummer: 04766654.0
(22) Anmeldetag: 31.08.2004
(51) Int. Cl.: H04L 12/64, H04L 12/28

(54) **TEILNEHMERSCHALTUNG FUER KOMMUNIKATIONSSYSTEME SOWIE KOMMUNIKATIONSSYSTEM**
SUBSCRIBER LINE CIRCUIT FOR COMMUNICATION SYSTEMS AND COMMUNICATION SYSTEM
CIRCUIT D'ABONNES DESTINE A DES SYSTEMES DE COMMUNICATION ET SYSTEME DE COMMUNICATION

(30) Priorität: 08.09.2003 DE 10341363
(43) Veröffentlichungstag der Anmeldung: 07.06.2006
(73) Patentinhaber: SIEMENS AKTIENGESELLSCHAFT, 80333 München (DE)
(72) Erfinder: WIMMREUTER, Wilhelm, 81543 München (DE)
(86) Internationale Anmeldenummer: PCT/EP2004/051972
(87) Internationale Veröffentlichungsnummer: WO 2005/027441

(56) Entgegenhaltungen:
- WO-A-00/77990
- US-A1- 2003 091 032
- US-B1- 6 470 046
- "CONVERGENCE IN LOCAL TELEPHONE NETWORKS SOFTSWITCH AND PACKET VOICE" COPPERCOM TECHNOLOGY WHITE PAPER, XX, XX, 1. Juni 2000 (2000-06-01), Seiten A-C,1, XP001150469

## Beschreibung

Teilnehmerschaltungen für Kommunikationssysteme, insbesondere für Telekommunikationssysteme, auch bekannt als Line Modules SLM, werden heute typischerweise als TDM-Module (TDM = Time Division Multiplex, Zeitmultplex-Verfahren) oder als xDSL-Module (DSL = Digital Subscriber Line) ausgeführt. xDSL ist dabei eine übliche Bezeichnung für ein beliebiges DSL-Verfahren, beispielsweise: symmetrisches DSL-Verfahren SDSL, asymmetrisches DSL-Verfahren ADSL, DSL-Verfahren mit hoher Datenrate HDSL oder DSL-Verfahren mit sehr hoher Datenrate VDSL. Häufig sind auch kombinierte Module anzutreffen, die sowohl TDM als auch xDSL unterstützen, oder es werden je ein TDM- und ein xDSL-Modul einer Teilnehmerschaltung zugeordnet.

Dabei weisen TDM-Module in Teilnehmerschaltungen Kodierverfahren bzw. Codecs und eine aufwendige Einbettung in Konzentratoren mit Koppelnetzwerkanordnungen auf. xDSL-Module in Teilnehmerschaltungen sind typischerweise mit Konzentratoren verbunden, die als ATM-Systeme oder anderweitige Paket-Systeme ausgebildet sind. Unter einem Konzentrator versteht man dabei eine Einrichtung, welche die Anschlußleitungen vieler Endeinrichtungen auf wenige, an eine zentrale Einheit oder an einem Netzknoten angeschlossene Leitungen konzentriert.

Mit derartigen Anordnungen ergeben sich die folgenden Nachteile:
I. Unterschiedliche Kommunikationsserver, beispielsweise Server für herkömmliche Telefonie im PSTN (PSTN = Public Switched Telephone Network), Server für Voice over Internet Protocol (VoIP) Dienste oder Server für Datendienste, können nur über Gateways angesteuert werden. Diese Gateways benötigen komplexe Software.
II. Der eigentliche Dienst bzw. das Dienstmerkmal ist in der Regel nur über mehrstufige Mediation bzw. Übersetzung erreichbar. Jeder (logische) Abschluß eines Teilnetzes und jede Mediation erhöhen wiederum die Betriebskosten, und einige Subsysteme bzw. Teilnetze leiden bereits heute unter einem Mangel an verfügbaren Adressen.
III. Für die Kombination von breitbandigen Zugängen, etwa xDSL, und herkömmlichen Schmalband-Zugängen, via TDM, sind doppelte Konzentrationsstufen nötig.
IV. Sowohl die Koppelnetzwerke für den Schmalband- bzw. TDM-Anteil als auch die ATM Switches für den xDSL-Anteil sind teuer. Die ATM Switches sind darüber hinaus komplex hinsichtlich der Konfiguration.
V. Ressourcen, beispielsweise Töne, Ton-Empfänger und Ansagen, müssen zentral bereitgestellt werden.

Bekannte Maßnahmen zur zumindest teilweisen Umgehung dieser Probleme sehen Weichen oder Splitter vor. Die Teilnehmerleitung wird über Weichen oder Splitter und unterschiedliche Teilnehmerschaltungsmodule dem Breitbandsystem und den Schmalbandsystemen zugeführt.

Diese Maßnahmen liefern jedoch in der Teilnehmerschaltung keinen Abschluß für analoge Modemzugänge. Vielmehr wird für einen Modemzugang eine TDM-Verbindung zu einem Schmalband Remote Access Server benötigt. Durch diese Verbindungen werden wertvolle Ressourcen quer durch das TDM-Netzwerk gebunden.

Teilnehmerschaltungen mit Weichen und Splittern können ferner einen beim Teilnehmer unter Verwendung des Internet Protokolls erzeugten Datenstrom nicht transparent an Internet Protokoll basierte Netze weitergeben.

Es wird vielmehr eine Mediation benötigt, die als Modembank ausgeführt sein kann und der Teilnehmerschaltung nachgelagert ist. Diese Anordnungen sind teuer und bedingen einen hohen Konfigurations- und Wartungsaufwand sowie teure Verbindungen im PSTN von der Teilnehmerschaltung zur Modembank, oftmals über mehrere Vermittlungsstellen.

Aus dem Dokument US2003/0091032 ist eine Schaltung zum Anschluß von Teilnehmerendgeräten bekannt, mit netzseitigen Kommunikationsmitteln zum Anschluß an ein paketbasiertes Netz, sowie mit teilnehmerseitigen Kommunikationsmitteln zum Anschluß von Teilnehmerendgeräten, wobei eine bidirektionale Umsetzung der übertragenen Informationen stattfindet.

Es ist daher eine Aufgabe der vorliegenden Erfindung, eine Teilnehmerschaltung für Kommunikationssysteme und ein Kommunikationssystem anzugeben, durch welche die genannten Probleme vermieden werden.

Diese Aufgabe wird durch die Merkmale der unabhängigen Patentansprüche gelöst. Bevorzugte Ausführungsformen sind den abhängigen Patentansprüchen zu entnehmen.

Erfindungsgemäß wird ein Kommunikationssystem vorgesehen, das sich dadurch auszeichnet, daß Teilnehmerschaltungen mittels eines paketbasierten Netzes mit dem Kommunikationssystem in Verbindung stehen. Das paketbasierte Netz kann dabei beispielsweise ein Zugangsnetz bzw. Access Netzwerk oder das Internet sein.

Die Erfindung betrifft ferner geeignete Teilnehmerschaltungen. Neben Mitteln zur Kommunikation mit dem paketbasierten Netz weisen diese folgendes auf:
VI. Protokollmittel zur Kommunikation mit unterschiedlichen Netzelementen des Kommunikationssystems, und
VII. Mittel zur bidirektionalen Umsetzung der durch die teilnehmerseitigen Kommunikationsmittel von und zu Teilnehmerendgeräten übertragenen Informationen in die durch die netzseitigen Kommunikationsmittel von und zum Kommunikationssystem übertragenen Informationen.

Eine erfindungsgemäße Teilnehmerschaltung kann vorteilhaft folgendes aufweisen:
VIII.Mittel zum Anschluß herkömmlicher TDM Teilnehmerendgeräte,
IX. Mittel zum Anschluß herkömmlicher xDSL Teilnehmerendgeräte,
X. Mittel zum Terminieren von Modemverbindungen,
XI. Mittel zur Sprachkodierung und Sprachdekodierung (sog. Codecs, beispielsweise A-law oder µ-law Codecs),
XII. Sendemittel für Töne und/oder Ansagen, und/oder
XIII.Empfangsmittel für Töne.

Vorzugsweise erfolgt der Anschluß der netzseitigen Kommunikationsmittel an das paketbasierte Netz mittels zumindest einer Ethernetschnittstelle.

Das erfindungsgemäße Kommunikationssystem kann vorteilhaft folgendes aufweisen:
XIV. zumindest ein Netzelement mit Mitteln zur Kopplung des Netzes an Vermittlungsstellen des herkömmlichen leitungsvermittelnden Telefonnetzes, und/oder
XV. Netzelemente zur Bereitstellung von Diensten und Dienstmerkmalen: Gatekeeper und/oder Proxy-Server für Voice over Internet Protocol Dienste und/oder Elemente zur Zugriffssteuerung und/oder Nutzerauthentifizierung und/oder Router zum direkten Zugriff auf paketbasierte Kommunikationsnetze.

Ein wichtiger Vorteil der Erfindung liegt darin, daß sich die Schnittstelle zum Teilnehmer hin nicht ändern muß, wenn zwischen den Teilnehmerschaltungen und dem/den eigentlichen Dienst(en) bzw. Service(s), also im paketbasierten Netz (beispielsweise im Zugangsnetz oder im Internet) günstige paketbasierte Technik eingesetzt wird. Gleichzeitig stehen dem Teilnehmer alle bekannten und implementierten Dienste und Dienstmerkmale ohne Einschränkungen weiterhin zur Verfügung.

Durch die Erfindung können vorteilhaft die teuren Zugangsnetzwerke des Standes der Technik entfallen, beispielsweise die Koppelnetzwerkanordnungen und die ATM-Zugangsnetze. Es entfällt auch die Notwendigkeit, duale Zugangsnetzwerke vorzuhalten in Fällen, in denen beispielsweise TDM-Dienste und xDSL-Dienste parallel angeboten werden. Erfindungsgemäß ist zum Vorsehen multipler Dienste nur ein Zugangsnetzwerk erforderlich. Die Konzentratoren können ebenfalls entfallen, da in den paketbasierten Zugangsnetzen, insbesondere bei Verwendung von LAN-Techniken, Bandbreite üblicherweise preiswerter als eine Konzentratorlösung ist.

Weitere Vorteile sind:
XVI. Die Erfindung ermöglicht ein reines zellbasiertes Zugangssystem für TDM (Schmalband) und Breitband Teilnehmerzugänge.
XVII.Konventionelle lokale Vermittlungsstellen können nach Erweiterung mit Paketschnittstellen ihre Leistungsmerkmalvielfalt auch für paketbasierte Teilnehmerschaltungen zur Verfügung stellen.
XVIII.Unterschiedliche Server können gleichzeitig mit einer Teilnehmerschaltung kommunizieren, d.h. die Teilnehmerschaltung unterstützt die Bindung zu mehreren Diensten bzw. Services. Das ermöglicht eine gleichzeitige Nutzung unterschiedlicher Kommunikationsserver durch einen Teilnehmer, beispielsweise herkömmliche Telefonie, Internetzugang, Voice over IP. Es ermöglicht ferner die vereinfachte Implementierung neuer Services im Netz, ohne daß Modifikationen der Teilnehmerschaltung erforderlich sind.
XIX. Neue Transporttechnologien zwischen Teilnehmer und Kommunikationssystem werden bereits in der Teilnehmerschaltung auf ein einfaches Protokoll umgesetzt.
XX. Lokale Vermittlungsstellen können vereinfacht oder ersetzt werden.
XXI. Rechenleistung für Mediation zwischen TDM, Analog, IP oder ATM wird dezentralisiert.
XXII.Administration und Dimensionierung von Zugangsnetzen vereinfachen sich erheblich.
XXIII.Töne können direkt in der Teilnehmerschaltung erzeugt werden, Ansagen können beispielsweise in Form von Dateien an die Teilnehmerschaltung übertragen und dort abgespielt werden.
XXIV.Ton- und Spracherkennung zur Aufnahme von Adreß- und Steuerinformationen kann in der Teilnehmerschaltung erfolgen.
XXV. Paketbasierte Telefonie-Protokolle wie H.323 und SIP können in der Teilnehmerschaltung auf TDM umgesetzt oder alternativ bis zu den Teilnehmerendgeräten durchgeleitet werden.
XXVI.Einsparung von Paketnetzadressen, da durch die Erfindung der Medienbruch zwischen lokalen Netzen beim Teilnehmer, dem Zugangsnetz und den Transportnetzen vermieden oder zumindest reduziert wird.
XXVII.Teilnehmerkarten können aufgrund ihrer Bindung nach Einschalten der Stromversorgung voneinander unabhängig mit individueller Software geladen werden.
XXVIII.Komponenten wie Controller für Teilnehmerschaltungen entfallen, da die Teilnehmerschaltungen autonom arbeiten.
XXIX.Die durch Einsatz von Media Gateways üblicherweise notwendige "zweite" Umsetzung des Nutzkanals (Bearer Channel) entfällt, da bereits in der Teilnehmerschaltung in das Paketformat umgesetzt wird.
XXX. Bisherige Bindungen sind als physikalische Drahtverbindungen ausgeführt, die bei Änderung der Bindung neu verdrahtet bzw. umrangiert werden müssen. Solche Änderungen sind beispielsweise erforderlich, um in bestimmten Anschlußkonfigurationen die optimale Leistung für alle angeschlossenen Teilnehmer zu gewährleisten. Dieses kostenaufwendige und umständliche Umrangieren entfällt durch die erfindungsgemäßen Teilnehmerschaltungen. Die Dimensionierung der Zugangsnetze vereinfacht sich erheblich.
XXXI.Die zusätzlichen Aufgaben der erfindungsgemäßen Teilnehmerschaltungen könnten aufgrund der hohen Leistungsfähigkeit selbst einfachster DSPs prinzipiell bereits durch die Hardware bestehender Teilnehmerschaltungen geleistet werden. Somit liegen die Herstellungskosten für die erfindungsgemäßen Teilnehmerschaltungen gleichauf oder niedriger mit denen der Teilnehmerschaltungen des Standes der Technik. Beispielsweise sind die für die Realisierung einer Ethernet-Schnittstelle erforderlichen Bausteine wesentlich preiswerter als die für die Realisierung einer klassischen TDM-Schnittstelle benötigten.

Im folgenden wird ein Ausführungsbeispiel der Erfindung im Zusammenhang mit zwei Figuren näher erläutert.
Figur 1 zeigt ein Ausführungsbeispiel der Erfindung mit einem Kommunikationssystem, bei dem eine erfindungsgemäße Teilnehmerschaltung mit einem Zugangsnetz verbunden ist.
Figur 2 zeigt ein weiteres Ausführungsbeispiel der Erfindung, in welchem die erfindungsgemäße Teilnehmerschaltung direkt mit dem Paketnetz verbunden ist.

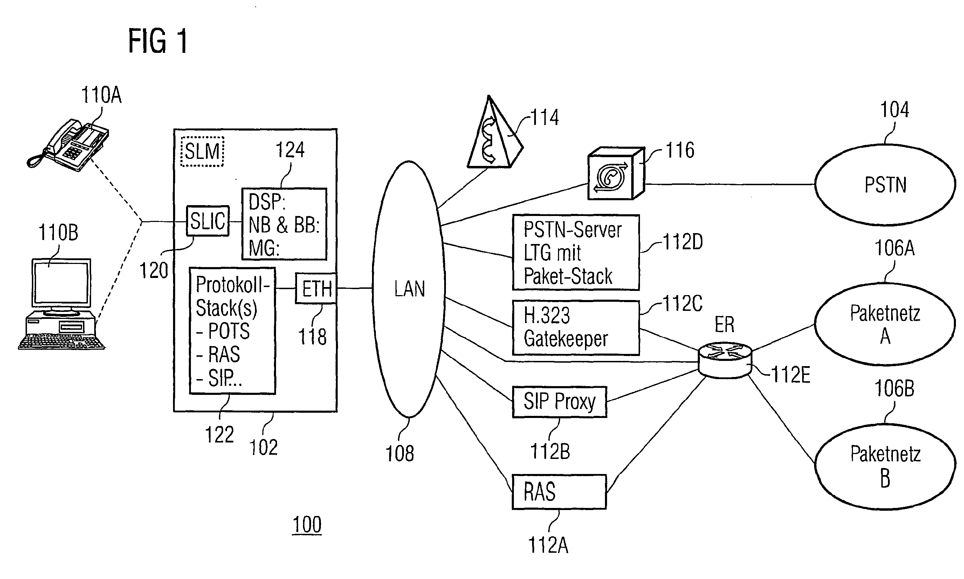

In Figur 1 ist ein Kommunikationssystem 100 gemäß einem Aspekt der vorliegenden Erfindung schematisch dargestellt. Das Kommunikationssystem 100 weist eine erfindungsgemäße Teilnehmerschaltung 102 auf. Das Kommunikationssystem 100 kann grob unterteilt werden in Transportnetze 104, 106A-B und ein oder mehrere Zugangsnetze oder Zwischennetze 108.

Die Transportnetze 104, 106A-B dienen dem Transport von Informationen. Dabei werden sowohl Signalisierungsinformationen als auch Nutzinformationen transportiert. Im Figur 1 sind ein klassisches Telefonnetz PSTN (PSTN = Public Switched Telephone Network) 104 und zwei Paketnetze 106A-B beispielhaft dargestellt. Nicht dargestellt sind an die jeweiligen Transportnetze angeschlossene Endpunkte und vermittelnde Elemente der Transportnetze, da eine Vielzahl von Ausprägungen von Transportnetzen, vermittelnden Elementen und Endpunkten in der Technik wohlbekannt ist.

Das Zugangsnetz 108 dient dazu, Teilnehmerendgeräten 110A-B Zugang zu den Transportnetzen 104, 106A-B zu verschaffen. Das Zugangsnetz 108, welches im Stand der Technik durch aufwendige Koppelnetzwerkanordnungen und/oder teure ATM-Netze gebildet wird, ist gemäß der vorliegenden Erfindung ein einfaches und kostengünstiges Paketnetz, beispielsweise ein lokales Netzwerk LAN auf Ethernet-Basis.

Über dieses Zugangsnetz 108 können Informationen auf Basis des Internetprotokolls IP übertragen werden, beispielsweise von und zu einem der folgenden Netzelemente 112A-112E: Remote Access Service (RAS) Element 112A, Session Initiation Protocol (SIP) Proxy 112B, ITU-T H.323 Gatekeeper 112C, PSTN Call Server 112D, Edge Router (ER) 112E. Der Edge Router 112E befindet sich am Übergang in die paketbasierten Transportnetze. Je nach verwendetem Kommunikationsprotokoll können weitere Netzelemente (nicht dargestellt) im Zugangsnetz 108 erforderlich sein. Über ein Konverter-Element 116 ist der Anschluß des Zugangsnetzes 108 an das PSTN 104 möglich.

Ferner werden über das Zugangsnetz 108 Informationen übertragen, die der Steuerung der Teilnehmerschaltung 102 dienen. Beispielsweise kann ein SoftSwitch 114 vorgesehen sein, diese Steuerung zu liefern. Im Zusammenhang mit einem SoftSwitch kann das sogenannte Ancillary Control Protocol ACP zur Übermittlung von Steuer- und Statusinformationen von und zur Teilnehmerschaltung 102 verwendet werden.

Die erfindungsgemäße Teilnehmerschaltung 102 weist vorzugsweise folgendes auf: netzseitige Kommunikationsmittel 118, beispielsweise zumindest eine Ethernetschnittstelle ETH; teilnehmerseitige Kommunikationsmittel 120, beispielsweise zumindest eine als Subscriber Line Interface Circuit SLIC bekannte Schaltung; Protokollmittel 122 zur Kommunikation mit den unterschiedlichen Netzelementen 112A-E, 114, 116, beispielsweise in Form sogenannter Protokollstacks für alle benötigten Protokolle wie RAS, SIP, herkömmliche Telefonie POTS ("plain old telephone service"), ebenso für Internetprotokoll IP als Transportprotokoll.

Ferner weist die Teilnehmerschaltung 102 Prozessormittel 124 auf, die eine bidirektionale Umsetzung der als Teilnehmersignale über die teilnehmerseitigen Kommunikationsmittel 120 empfangenen und gesendeten Informationen in Paketform vorsehen. Die Prozessormittel 124 können beispielsweise einen Digitalen Signalprozessor DSP aufweisen.

Die Prozessormittel 124 können außerdem Funktionen für die Sprachkodierung und Sprachdekodierung aufweisen, beispielsweise Codecs wie A-law oder µ-law, sowie Tonempfänger, Tongeneratoren bzw. Tonsendemittel und Ansagegeneratoren bzw. Ansagemittel. Die Ansagen können beispielsweise in kodierter Form an die Ansagegeneratoren übermittelt und dort in gesprochene Sprache umgesetzt werden.

Darüber hinaus können vorteilhaft Modemfunktionen in der erfindungsgemäßen Teilnehmerschaltung 102 vorgesehen werden, beispielsweise ebenfalls realisiert mittels der Prozessormittel 124, wodurch die Modembänke des Standes der Technik und die teuren Verbindungen zu diesen Modemverbindungen überflüssig werden. Die Modemfunktionen können sowohl zur Terminierung analoger Modemverbindungen als auch für die Terminierung von xDSL-Verbindungen ausgestaltet sein.

Eine erfindungsgemäße Teilnehmerschaltung 102 kann als ein "autonomer Host" betrachtet werden. Ein solcher autonomer Host ist in der Lage, seine Funktionalität mit den Netzelementen 112A-E, 114, 116, die auch als Server angesehen werden können, zu binden. Diese Bindung erfolgt entweder manuell, beispielsweise durch Einstellen der Partneradresse in der Teilnehmerschaltung 102, oder automatisch, beispielsweise während des Boot-Vorgangs der Teilnehmerschaltung 102 durch geeignete Verfahren, etwa mittels DHCP (Dynamic Host Configuration Protocol). Aufwendige Management-Controller, wie sie bislang eingesetzt werden, können entfallen und müssen daher auch nicht mehr administriert werden. Dadurch ergeben sich Einsparungsmöglichkeiten hinsichtlich der operativen Kosten des Kommunikationssystems 100.

Die für die Bindung an die Netzelemente 112A-E, 114, 116 notwendigen Schritte erfolgen beispielsweise unter Steuerung der Prozessormittel 124 und/oder der Protokollmittel 122, etwa mittels eines DHCP-Protokollstacks. Somit ist keine weitere Konfiguration erforderlich, um die Netzelemente 112A-E, 114, 116 bzw. Server zu identifizieren. Die Bindung kann dabei statisch erfolgen, indem die Bindung an alle oder ausgewählte Netzelemente nach erstmaliger Festlegung, etwa beim Boot-Vorgang, konstant bleibt, oder auch für einige oder alle Netzelemente dynamisch, angepaßt an die betrieblichen Erfordernisse.

Wie bereits erwähnt, können die netzseitigen IP-basierten Kommunikationsprótokolle, beispielsweise SIP oder H.323, gemäß eines Ausführungsbeispiels in der Teilnehmerschaltung 102 terminiert und dort in klassisches ISDN oder analoges Protokoll zur Weiterleitung an die Teilnehmerendgeräte 110A-B umgesetzt werden. In einem anderen Ausführungsbeispiel ist es möglich, diese Protokolle transparent durch die Teilnehmerschaltung 102 an die Teilnehmerendgeräte 110A-B weiterzuleiten. Dies wird auch als "Bridging" bezeichnet.

Erfindungsgemäße Teilnehmerschaltungen 102 können mittels mehrerer teilnehmerseitiger Kommunikationsmittel 120 gleichzeitig mehrere Teilnehmer und deren jeweilige Teilnehmerendgeräte (110A-B) versorgen. Übersteigt die Anzahl der Teilnehmer eine bestimmte Schwelle, können weitere netzseitige Kommunikationsmittel 118 vorgesehen werden, um genügend Transportkapazität bereitzustellen. Auch aus Redundanzgründen kann der Einsatz mehrerer netzseitiger Kommunikationsmittel 118 vorgesehen werden, damit der Ausfall einer einzelnen Schnittstelle nicht die Verfügbarkeit der Teilnehmerschaltung 102 gefährdet.

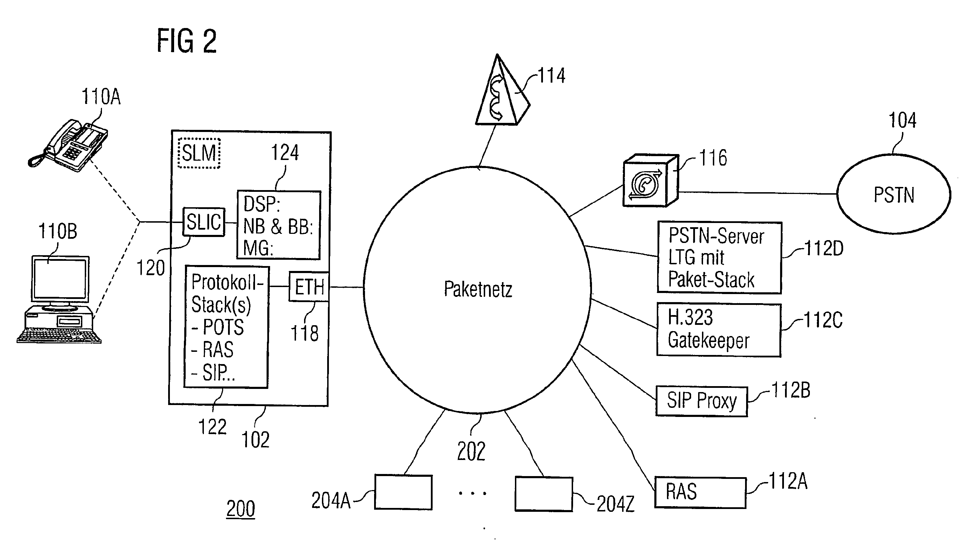

Figur 2 zeigt ein alternatives Kommunikationssystem 200. Im Unterschied zum Kommunikationssystem aus Figur 1 ist die Teilnehmerschaltung 102 direkt mit einem paketbasierten Netz oder Paketnetz 202, beispielsweise mit dem Internet, verbunden. Ein gesondertes Zugangsnetz 108 ist in diesem Fall nicht erforderlich.

An das Paketnetz 202 angeschlossen sind wiederum die bereits im Zusammenhang mit Figur 1 beschriebenen Netzelemente 112A-E, 114, 116, welche die dort erläuterten Funktionen ausfüllen. Es sei darauf hingewiesen, daß nicht alle dieser Netzelemente in jeder Ausführung der Erfindung gleichzeitig vorhanden sein müssen; beispielsweise ist ein H.323 Gatekeeper 112C vorzugsweise dann vorzusehen, wenn H.323 Dienste angeboten werden sollen.

Die für das beispielhafte Kommunikationssystem 200 gewählte Anordnung hat gegenüber dem Kommunikationssystem 100 aus Figur 1 unter anderem den Vorteil, daß das Zugangsnetz 108 entfällt und damit die Administration und Wartung eines solchen Zugangsnetzes 108 sowie die mehrfachen Übergänge zwischen dem Paketnetz 202 und der Teilnehmerschaltung 102. Ein weiterer Vorteil besteht darin, daß die Teilnehmerschaltung an jedem beliebigen Ort angeordnet werden kann, der einen Anschluß an das (globale) Paketnetz 202 erlaubt.

Um die Verfügbarkeit der Services für den Teilnehmer zu erhöhen, kann vorgesehen werden, die Teilnehmerschaltung 102 mit mehr als einer Verbindung mit dem paketbasierten Netz 202 zu verbinden - nicht dargestellt.

Angeschlossen an das paketbasierte Netz 202 können verschiedenste Netzelemente und Endpunkte sein, schematisch dargstellt durch Boxen 204A..Z. Diese Netzelemente können weitere Diensteserver sein, etwa FTP-Server, sonstige Datenserver, Webserver, Videoserver, Zeitansagedienste, Sprachcomputer usw. Endpunkte können weitere Teilnehmerschaltungen, aufgebaut wie die Teilnehmerschaltung 102, sein, oder auf beliebige Weise mit dem Internet verbundene Endpunkte wie Telefonieendgeräte und Datenendgeräte.

Das Kommunikationssystem gemäß Figur 2 kann somit einen Peerto-Peer Betrieb unterstützen, beispielsweise zwischen zwei erfindungsgemäßen Teilnehmerschaltungen, wobei dann beispielsweise ein SoftSwitch 114 zur Steuerung nicht mehr benötigt wird.

## Patentansprüche

1. Teilnehmerschaltung (102) für ein Kommunikationssystem (100, 200) mit teilnehmerseitigen Kommunikationsmitteln (120) zum Anschluß von Teilnehmerendgeräten (110A-B) und netzseitigen Kommunikationsmitteln (118) zur Kopplung der Teilnehmerschaltung (102) an das Kommunikationssystem (100, 200), wobei,
- die netzseitigen Kommunikationsmittel (118) Mittel zum Anschluß an ein paketbasiertes Netz (108, 202) umfassen, und
- die Teilnehmerschaltung (102) Mittel (124) zur bidirektionalen Umsetzung der durch die teilnehmerseitigen Kommunikationsmittel von und zu den Teilnehmerendgeräten (110A-B) übertragenen Informationen in die durch die netzseitigen Kommunikationsmittel (118) von und zum Kommunikationssystem (100, 200) übertragenen Informationen aufweist, **dadurch gekennzeichnet, daß**
- die Teilnehmerschaltung (102) eine Mehrzahl unterschiedlicher Protokollmittel (122) zur Kommunikation mit unterschiedlichen Netzelementen (112A-E, 114, 116) des Kommunikationssystems (100, 200) aufweist.

2. Teilnehmerschaltung nach Anspruch 1, **gekennzeichnet durch** Mittel zum automatischen Ermitteln der Bindung zu den unterschiedlichen Netzelementen (112A-E, 114, 116) während eines Boot-Vorganges der Teilnehmerschaltung (102).

3. Teilnehmerschaltung nach Anspruch 1, **gekennzeichnet durch** Mittel zum manuellen Einstellen der Bindung zu den unterschiedlichen Netzelementen (112A-E, 114, 116).

4. Teilnehmerschaltung nach einem der Ansprüche 1 bis 3,
**dadurch gekennzeichnet,**
**daß** die teilnehmerseitigen Kommunikationsmittel (120) Mittel zum Anschluß herkömmlicher TDM Teilnehmerendgeräte (110A) umfassen.

5. Teilnehmerschaltung nach einem der Ansprüche 1 bis 4,
**dadurch gekennzeichnet,**
**daß** die teilnehmerseitigen Kommunikationsmittel (120) Mittel zum Anschluß herkömmlicher xDSL Teilnehmerendgeräte (110B) umfassen.

6. Teilnehmerschaltung nach einem der Ansprüche 1 bis 5, **gekennzeichnet durch** Mittel zum Terminieren von Modemverbindungen.

7. Teilnehmerschaltung nach einem der Ansprüche 1 bis 6,
**dadurch gekennzeichnet,**
**daß** die teilnehmerseitigen Kommunikationsmittel Mittel zur A-law oder µ-law Sprachkodierung und/oder Sendemittel für Töne und/oder Ansagen und/oder Empfangsmittel für Töne aufweisen.

8. Teilnehmerschaltung nach einem der Ansprüche 1 bis 7,
**dadurch gekennzeichnet,**
**daß** die Mittel zum Anschluß an das paketbasierte Netz (108, 202) der netzseitigen Kommunikationsmittel (118) zumindest eine Ethernetschnittstelle aufweisen.

9. Kommunikationssystem (100, 200) mit einer Mehrzahl von unterschiedlichen Netzelementen (112A-E, 114, 116) zur Bereitstellung von Diensten und Dienstmerkmalen für Teilnehmerendgeräte (110A-B) sowie mit zumindest einer Teilnehmerschaltung (102) zur Kopplung der Teilnehmerendgeräte (110A-B) an das Kommunikationssystem (100, 200), sowie mit
- einen paketbasierten Netz (108, 202) zur Verbindung der Teilnehmerschaltung (102) mit den Netzelementen,
- der Teilnehmerschaltung (102) zugeordneten Mitteln (124) zur bidirektionalen Umsetzung der durch teilnehmerseitige Kommunikationsmittel (120) von und zu den Teilnehmerendgeräten (110A-B) übertragenen Informationen in die durch netzseitige Kommunikationsmittel (118) von und zum Kommunikationssystem (100, 200) übertragenen Informationen, **gekennzeichnet durch**
- eine der Teilnehmerschaltung (102) zugeordnete Mehrzahl unterschiedlicher Protokollmittel (122) zur Kommunikation mit den Netzelementen des Kommunikationssystems (100, 200).

10. Kommunikationssystem nach Anspruch 9, **dadurch gekennzeichnet, daß** zumindest eines der Netzelemente Mittel zur Kopplung des paketbasierten Netzes (108, 202) an Vermittlungsstellen des herkömmlichen leitungsvermittelnden Telefonnetzes (104) aufweist.

11. Kommunikationssystem nach einem der Ansprüche 9 oder 10, **gekennzeichnet durch** folgende Netzelemente zur Bereitstellung von Diensten und Dienstmerkmalen: Gatekeeper (112C) und/oder Proxy-Server (112B) für Voice over Internet Protocol Dienste und/oder Elemente (112A) zur Zugriffssteuerung und/oder Nutzerauthentifizierung und/oder Router (112E) zum direkten Zugriff auf paketbasierte Kommunikationsnetze (106A-B).

12. Kommunikationssystem nach einem der Ansprüche 9 bis 11, **dadurch gekennzeichnet, daß** das paketbasierte Netz ein Zugangsnetz (108) ist.

13. Kommunikationssystem nach einem der Ansprüche 9 bis 11, **dadurch gekennzeichnet, daß** das paketbasierte Netz das Internet (202) ist.

## Claims

1. Subscriber line circuit (102) for a communication system (100, 200) having subscriber-side communication means (120) for connecting subscriber terminals (110A-B) and network-side communication means (118) for coupling said subscriber line circuit (102) to the communication system (100, 200),
wherein
- the network-side communication means (118) include means for connecting to a packet-based network (108, 202) and
- the subscriber line circuit (102) has means (124) for bi-directionally converting the information transmitted by the subscriber-side communication means to and from the subscriber terminals (110A-B) into the information transmitted by the network-side communication means (118) to and from the communication system (100, 200).
**characterised in that**
- the subscriber line circuit (102) has a plurality of different protocol means (122) for communicating with different network elements (112A-E, 114, 116) of the communication system (100, 200).

2. Subscriber line circuit according to claim 1, **characterised by** means for automatically determining the link to the different network elements (112A-E, 114, 116) during booting of the subscriber line circuit (102).

3. Subscriber line circuit according to claim 1, **characterised by** means for manually setting the link to the different network elements (112A-E, 114, 116).

4. Subscriber line circuit according to one of claims 1 to 3,
**characterised in that**
the subscriber-side communication means (120) include means for connecting conventional TDM subscriber terminals (110A).

5. Subscriber line circuit according to one of claims 1 to 4,
**characterised in that**
the subscriber-side communication means (120) include means for connecting conventional xDSL subscriber terminals (110B).

6. Subscriber line circuit according to one of claims 1 to 5, **characterised by** means for terminating modem connections.

7. Subscriber line circuit according to one of claims 1 to 6,
**characterised in that**
the subscriber-side communication means have means for A-law or µ-law voice coding and/or transmitting means for tones and/or announcements and/or receiving means for tones.

8. Subscriber line circuit according to one of claims 1 to 7,
**characterised in that**
the means for connecting to the packet-based network (108, 202) of the network-side communication means (118) have at least one Ethernet interface.

9. Communication system (100, 200) having a plurality of different network elements (112A-E, 114, 116) for providing services and service features for subscriber terminals (110A-B) and having at least one subscriber line circuit (102) for coupling said subscriber terminals (110A-B) to the communication system (100, 200), and also having
- a packet-based network (108, 202) for connecting the subscriber line circuit (102) to the network elements,
- means (124), assigned to the subscriber line circuit (102), for bi-directionally converting the information transmitted by subscriber-side communication means (120) to and from the subscriber terminals (110A-B) into the information transmitted by network-side communication means (118) to and from the communication system (100, 200),
**characterised by**
- a plurality of different protocol means (122) assigned to the subscriber line circuit (102) for the purpose of communicating with the network elements of the communication system (100, 200).

10. Communication system according to claim 9, **characterised in that** at least one of the network elements has means for coupling the packet-based network (108, 202) to switching centres of the conventional circuit-switched telephone network (104).

11. Communication system according to one of claims 9 or 10, **characterised by** the following network elements for providing services and service features: gatekeeper (112C) and/or proxy server (112B) for Voice-over-Internet Protocol services and/or elements (112A) for controlling access and/or for user authentication and/or routers (112E) for directly accessing packet-based communication networks (106A-B).

12. Communication system according to one of claims 9 to 11, **characterised in that** the packet-based network is an access network (108).

13. Communication system according to one of claims 9 to 11, **characterised in that** the packet-based network is the internet (202).

## Revendications

1. Circuit d'abonné (102) destiné à un système de communication (100, 200), comprenant des moyens de communication côté abonné (120) pour le raccordement de terminaux d'abonnés (110A-B) et des moyens de communication côté réseau (118) pour le couplage du circuit d'abonné (102) au système de communication (100, 200),
- les moyens de communication côté réseau (118) comprenant des moyens pour le raccordement à un réseau basé sur paquets (108, 202) et
- le circuit d'abonné (102) comprenant des moyens (124) pour la conversion bidirectionnelle des informations transmises depuis et vers les terminaux d'abonnés (110A-B) par les moyens de communication côté abonné en les informations transmises depuis et vers le système de communication (100, 200) par les moyens de communication côté réseau (118),
**caractérisé en ce que** le circuit d'abonné (102) comprend une pluralité de moyens de protocole différents (122) pour la communication avec différents éléments de réseau (112A-E, 114, 116) du système de communication (100, 200).

2. Circuit d'abonné selon la revendication 1, **caractérisé par** des moyens pour la détermination automatique de la liaison vers les différents éléments de réseau (112A-E, 114, 116) pendant un processus de démarrage du circuit d'abonné (102).

3. Circuit d'abonné selon la revendication 1, **caractérisé par** des moyens pour le réglage manuel de la liaison vers les différents éléments de réseau (112A-E, 114, 116).

4. Circuit d'abonné selon l'une des revendications 1 à 3, **caractérisé en ce que** les moyens de communication côté abonné (120) comprennent des moyens pour le raccordement de terminaux d'abonnés TDM traditionnels (110A).

5. Circuit d'abonné selon l'une des revendications 1 à 4, **caractérisé en ce que** les moyens de communication côté abonné (120) comprennent des moyens pour le raccordement de terminaux d'abonnés xDSL traditionnels (110B).

6. Circuit d'abonné selon l'une des revendications 1 à 5, **caractérisé par** des moyens pour la terminaison de liaisons modem.

7. Circuit d'abonné selon l'une des revendications 1 à 6, **caractérisé en ce que** les moyens de communication côté abonné comprennent des moyens pour le codage vocal de loi A ou de loi µ et/ou des moyens émetteurs pour des sons et/ou annonces et/ou des moyens récepteurs pour des sons.

8. Circuit d'abonné selon l'une des revendications 1 à 7, **caractérisé en ce que** les moyens pour le raccordement au réseau basé sur paquets (108, 202) des moyens de communication côté réseau (118) comprennent au moins une interface Ethernet.

9. Système de communication (100, 200) comprenant une pluralité d'éléments de réseau différents (112A-E, 114, 116) pour la mise à disposition de services et attributs de services pour des terminaux d'abonnés (110A-B) et au moins un circuit d'abonné (102) pour le couplage des terminaux d'abonnés (110A-B) au système de communication (100, 200), et comprenant
- un réseau basé sur paquets (108, 202) pour la connexion du circuit d'abonné (102) aux éléments de réseau,
- des moyens (124) associés au circuit d'abonné (102) pour la conversion bidirectionnelle des informations transmises depuis et vers les terminaux d'abonnés (110A-B) par des moyens de communication côté abonné (120) en les informations transmises depuis et vers le système de communication (100, 200) par des moyens de communication côté réseau (118),
**caractérisé par** une pluralité de moyens de protocole différents (122) associés au circuit d'abonné (102) pour la communication avec les éléments de réseau du système de communication (100, 200).

10. Système de communication selon la revendication 9, **caractérisé en ce qu'**au moins un des éléments de réseau comprend des moyens pour le couplage du réseau basé sur paquets (108, 202) à des centres de commutation du réseau téléphonique à commutation de circuits traditionnel (104).

11. Système de communication selon l'une des revendications 9 ou 10, **caractérisé par** les éléments de réseau suivants pour la mise à disposition de services et attributs de services : portier (112C) et/ou serveur proxy (112B) pour des services de voix sur IP et/ou éléments (112A) pour la commande d'accès et/ou l'authentification d'utilisateurs et/ou routeur (112E) pour l'accès direct à des réseaux de communication basés sur paquets (106A-B).

12. Système de communication selon l'une des revendications 9 à 11, **caractérisé en ce que** le réseau basé sur paquets est un réseau d'accès (108).

13. Système de communication selon l'une des revendications 9 à 11, **caractérisé en ce que** le réseau basé sur paquets est l'Internet (202).
